# EUROPEAN PATENT SPECIFICATION

(11) **EP 1 081 039 B1**
(45) Date of publication and mention of the grant of the patent: **17.08.2005**
(21) Application number: 00118901.8
(22) Date of filing: 31.08.2000
(51) Int. Cl.: B62L 3/02, B62K 23/06, B62L 3/06, B60T 7/10

(54) **Parking brake device for vehicle**
Fahrzeugfeststellbremsvorrichtung
Dispositif de stationnement pour véhicule

(30) Priority: 31.08.1999 JP 24678599
(43) Date of publication of application: 07.03.2001
(73) Proprietor: YAMAHA HATSUDOKI KABUSHIKI KAISHA, Iwata-shi Shizuoka-ken (JP)
(72) Inventor: Hasegawa, Hirofumi, c/o Yamaha Hatsudoki K. K., Iwata-shi, Shizuoka-ken (JP); Hasegawa, Takehiko, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- US-A- 3 948 361
- US-A- 4 041 798
- US-A- 4 286 699

## Description

The invention relates to a parking brake device for a vehicle, which is adapted to prevent one or more wheels from rotating by rotation thereof during parking.

For example, there has been a motorcycle provided with a parking brake device for locking a wheel or wheels, as well as a brake system for braking them during normal running. There has been also a parking brake device in which a parking lever mounted on a steering handle is moved to prevent the rotation of a wheel or wheels.

In such a parking brake device, when the parking lever is rotated to achieve the operating position, the lever is automatically engaged and held at the operating position, resulting to maintain brake operating state. At the start of running, the parking lever must be disengaged intentionally.

However, in such conventional parking brake devices, there is often happened that the rider does not begin drawn on the parking brake device in operating state till he or she starts running. There is a need to improve such a problem. Although, conventionally, has been employed a device for detecting the operation of the parking brake and lighting up if in operating state, to call his or her attention, this device is not sufficient because the lighting is often over looked.

US-A-3,948,361 discloses a parking brake mechanism mounted on a handle bar assembly and including a brake lever connected to a brake through a brake cable and a U-shaped actuator member. Here, in a stop parking position of the vehicle, the actuator member has been compressed simultaneously with a compressor of the brake lever so that the brake lever is kept in its compressed position and the brake is engaged. In order to release the hand brake and the parking brake, it is necessary to compress the brake lever slightly so that the spring of the parking brake mechanism is able to move the actuator member back to a disengaged position and the brake lever is freely operable again, and, accordingly, the parking brake is released.

In view of the problems described above, an objective of the present invention is to provide a parking brake device having a simple constitution for a vehicle, for securely prevent the start of running with the parking brake being in operating state.

This objective is solved according to the present invention by a parking brake device for a vehicle, adapted to prevent a wheel or wheels from rotating at parking and comprising a parking lever connected to a parking brake mechanism by a parking cable, wherein said parking lever is disposed inward from a grip disposed on an end of a steering handle in such a manner that said parking lever is arranged adjacent to a brake lever disposed close-by said grip, and wherein said parking lever is rotatable between an operating and a non-operating position and wherein, in the operating position, said parking lever, due to it position, interferes with a hand holding said grip.

According to the invention, in the operating state of the parking brake device, the parking lever is adapted to interfere the hand which is gripping the left grip and therefore the driver can necessarily catch on to the operating state of the parking brake device before the start of running, thereby to avoid using a simple constitution the start of running in the operating state of the parking device.

Also, according to the invention, the parking lever can be rotated to the position where the parking brake does not operate. A throttle grip can be therefore operated while the parking lever is rotated toward the non-operating position of the parking brake device. Additionally, more smooth starting and improved operationality can be obtained.

Now, an embodiment of this invention will be described below with reference to the accompanying drawings.

Further preferred embodiments of the present invention are laid down in the further subclaims.

In the following, the present invention is explained in greater detail by means of several embodiments thereof in conjunction with the accompanying drawings, wherein:
- Fig. 1: is a left side view of a motorcycle;
- Fig. 2: is a front view of a body cover of the motorcycle;
- Fig. 3: is a left side view of the body cover;
- Fig. 4: is a rear view around a meter panel on the body cover;
- Fig. 5: is a front view of a screen on the body cover;
- Fig. 6: is a left side view of the screen;
- Fig. 7: is a sectional left side view of the screen;
- Fig. 8: is an exploded perspective view of a louver mechanism of the screen;
- Fig. 9: is a sectional side view (sectional view taken along line IX-IX) showing a left box of the body cover;
- Fig. 10: is a sectional plan view of a right box of the body cover;
- Fig. 11: is a sectional side view (sectional view taken along line XI-XI of Fig.4 and Fig. 10) showing the right box of the body cover;
- Fig. 12: is a left side view partially in section of the rear portion of the motorcycle;
- Fig. 13: is a left side view of the central portion of the motorcycle;
- Fig. 14: is a plan view of the seat damper section of the motorcycle;
- Fig. 15: is a sectional front view (sectional view taken along line XV-XV of Fig. 14) showing the seat hinge section;
- Fig. 16: is a left side view showing a container box of a container device of the motorcycle;
- Fig. 17: is a plan view of the container box;
- Fig. 18: is a plan view of the container box;
- Fig. 19: is a sectional plan view (sectional view taken along line XIX-XIX of Fig. 17) showing the container box;
- Fig. 20: shows sectional plan views of a seat device and the container device;
- Fig. 21: is a sectional left side view of the seat device and the container device, taken along the center line of the vehicle;
- Fig. 22: is a sectional plan view (sectional view taken along line IIXII-IIXII of Fig. 12) of the seat device and the container device;
- Fig. 23: is a perspective view of a tandem seat of the seat device;
- Fig. 24: is a left side view of the tandem seat section of the motorcycle;
- Fig. 25: is a sectional rear view (sectional view taken along line IIXV-IIXV of Fig. 24) of the tandem seat section;
- Fig. 26: shows sectional rear views (sectional views taken along line IIXVIa-IIXVIa and line IIXVIb-IIXVIb of Fig. 24) of the seat load receiving section and the mounting section;
- Fig. 27: is a plan view of the fuel tank mounting section of the motorcycle;
- Fig. 28: is a left side view of the fuel tank mounting section;
- Fig. 29: is a plan view showing a lid for a fuel supply cap of the body cover;
- Fig. 30: shows sectional views around the lid (sectional views taken along line IIIXa-IIIXa, line IIIXb-IIIXb and line IIIXc-IIIXc of Fig. 29);
- Fig. 31: is a side view around a parking brake lever of the motorcycle;
- Fig. 32: is a plan view around the parking brake lever;
- Fig. 33: is a plan view of the parking brake lever body;
- Fig. 34: is a side view of the parking brake mechanism; and
- Fig. 35: is a sectional plan view of the parking brake mechanism.

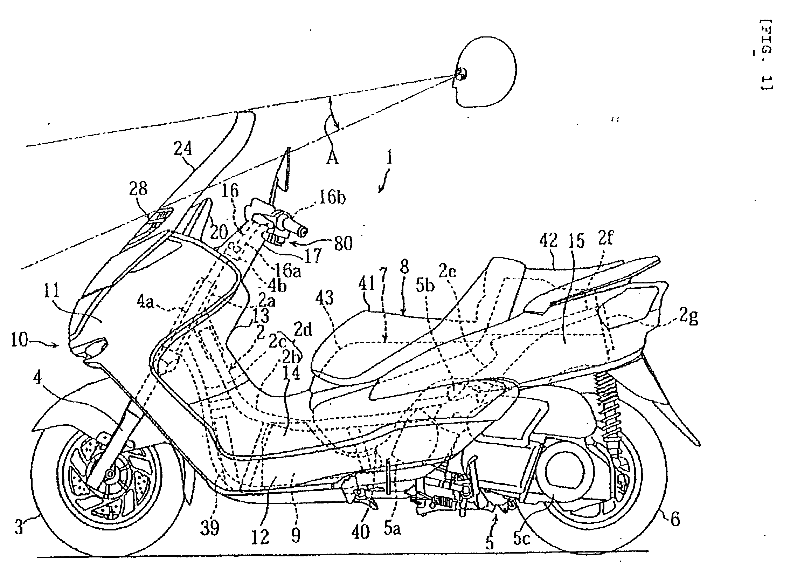

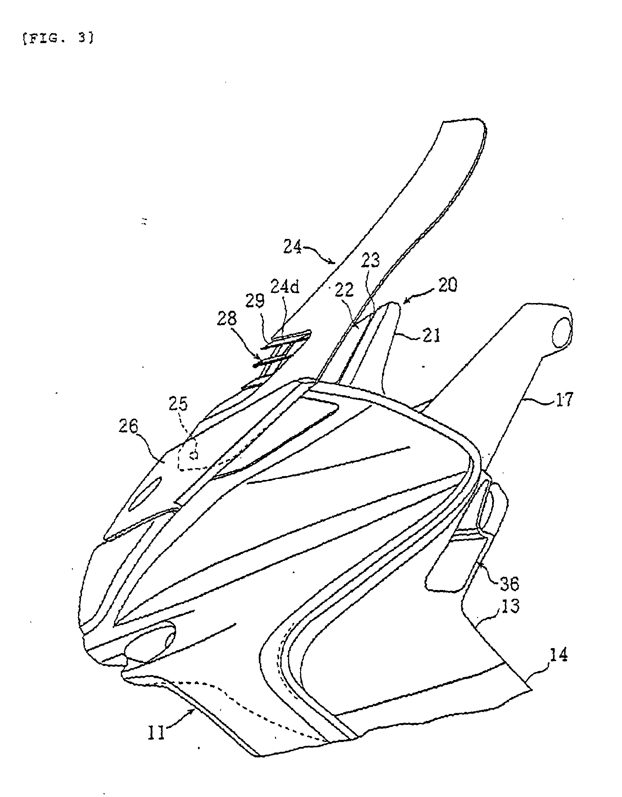

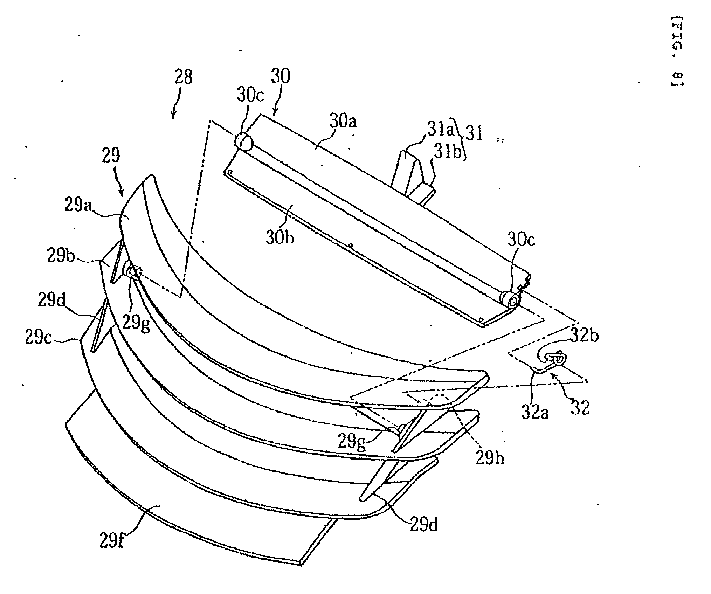

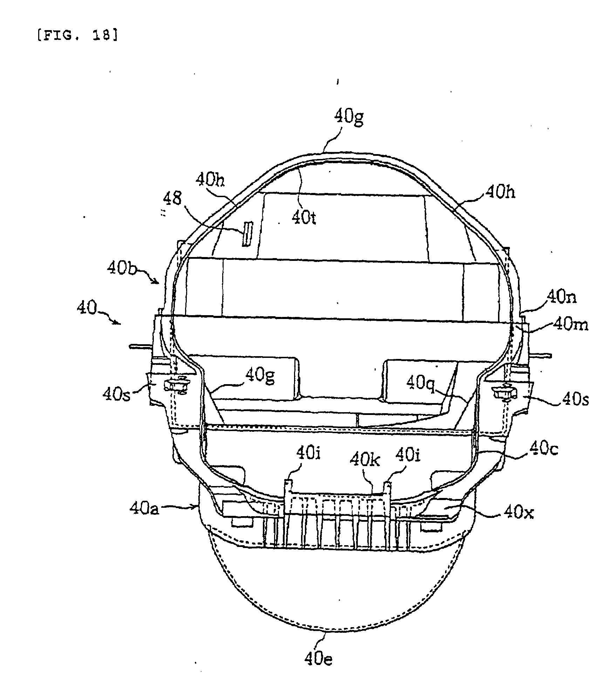

Here, the devices of the motorcycle as shown in Figs. 1 to 30 do not fall under the scope of the present invention and is kept in the description of the present invention for a better comprehension thereof.

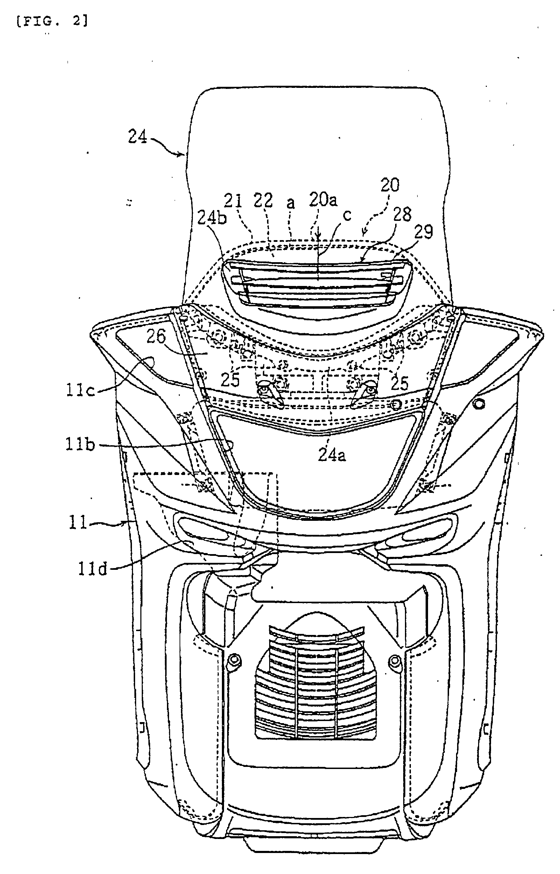

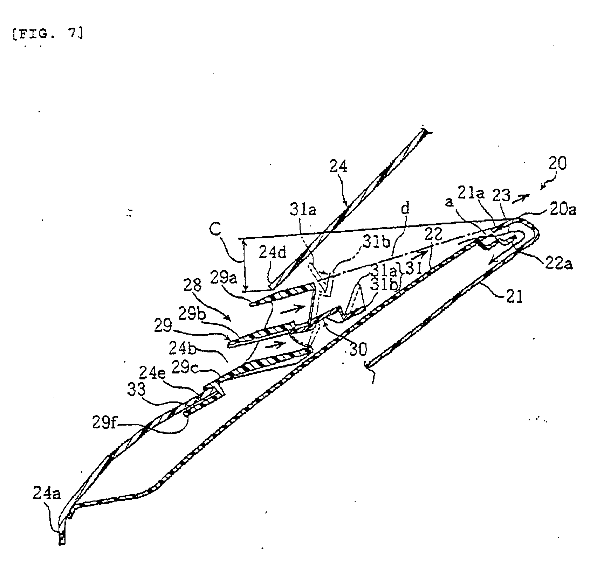

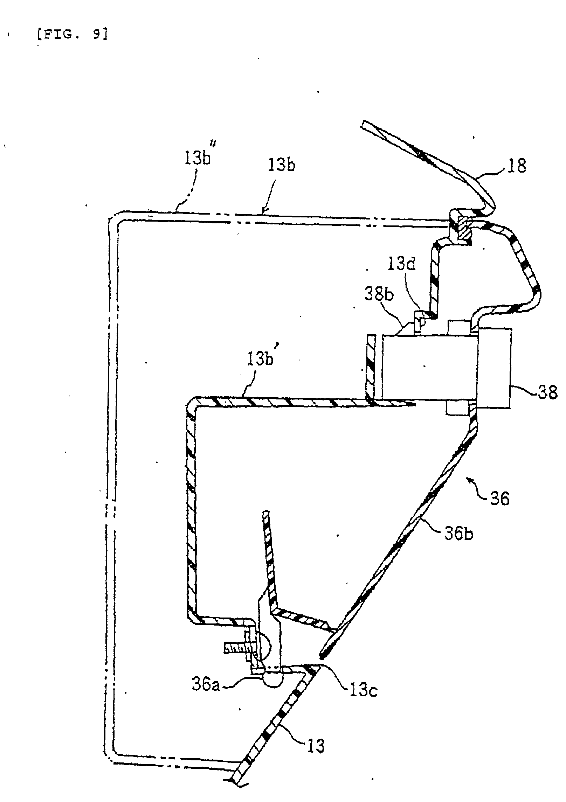

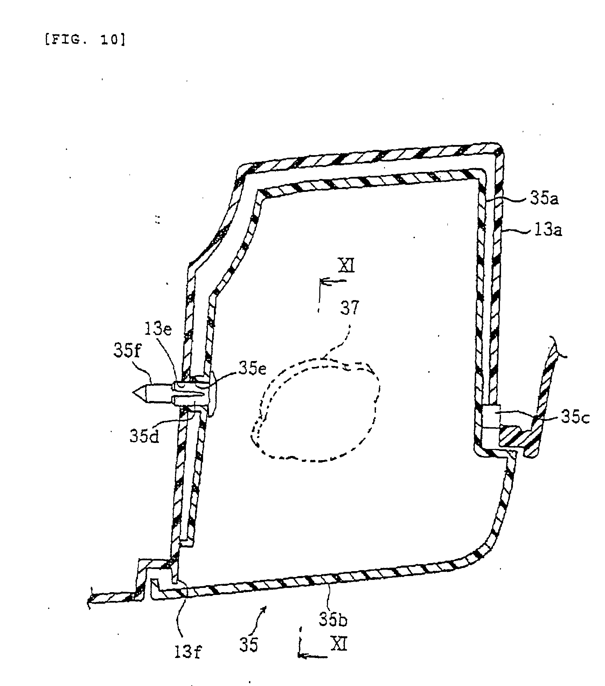

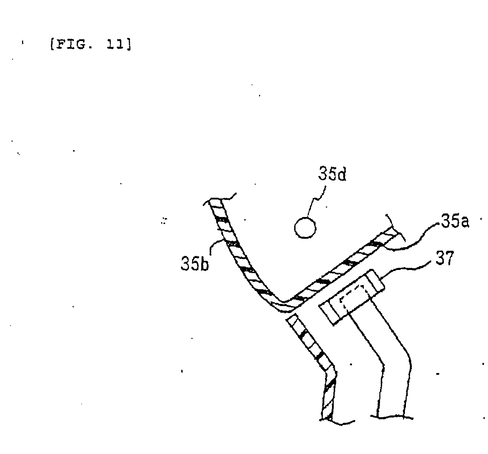

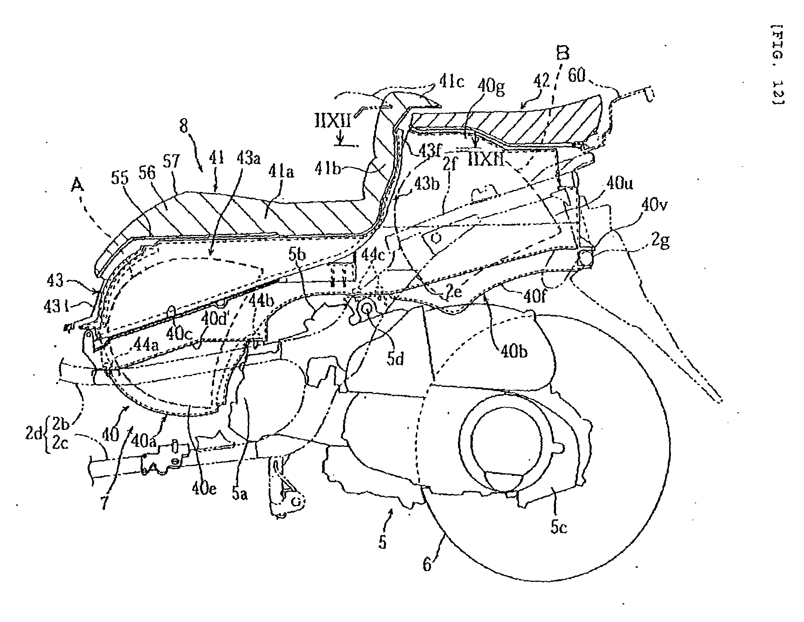

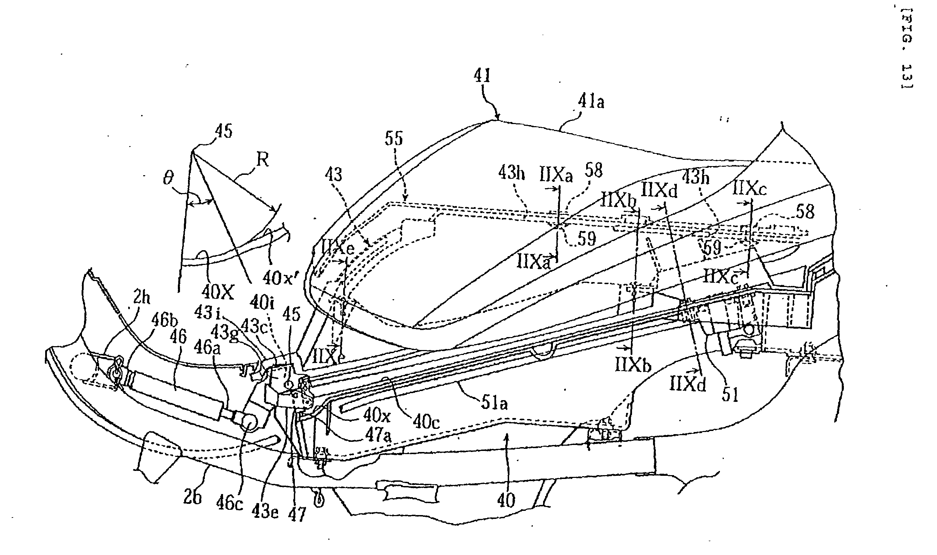

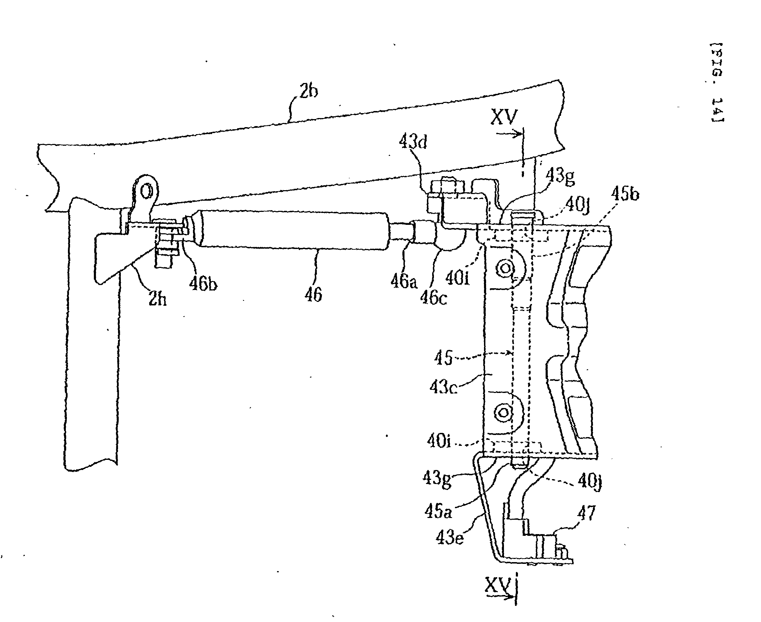

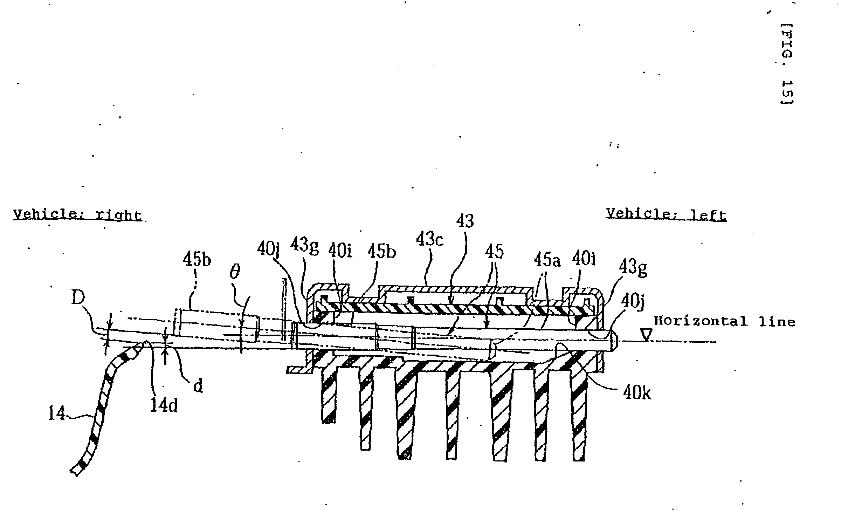

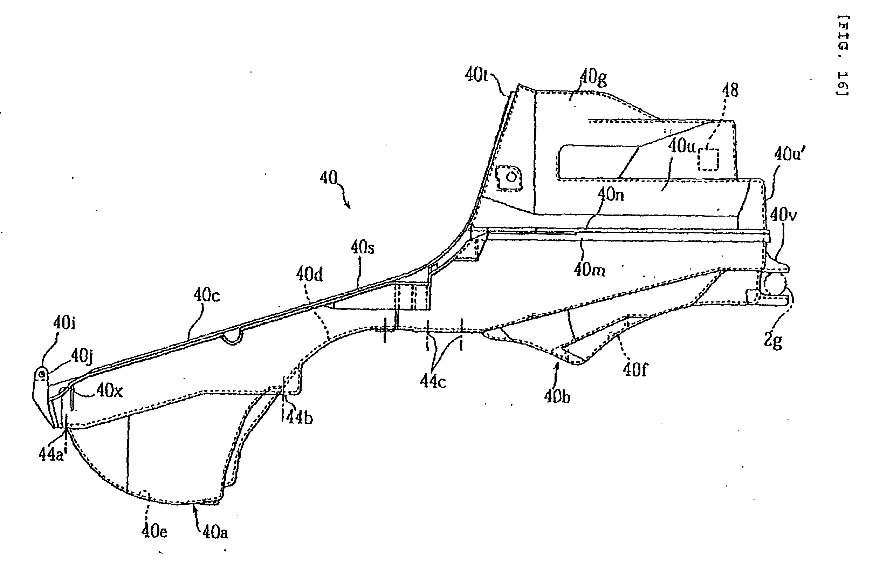

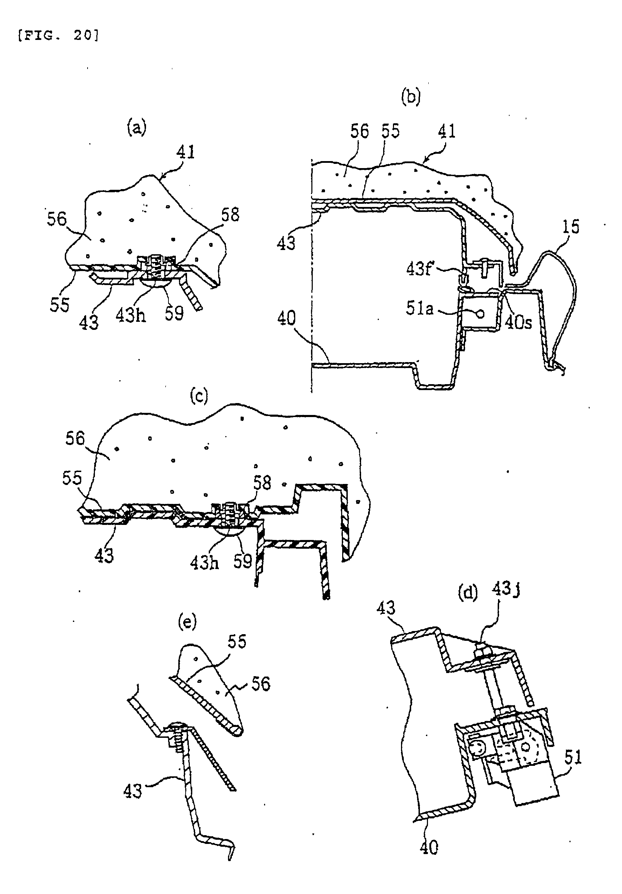

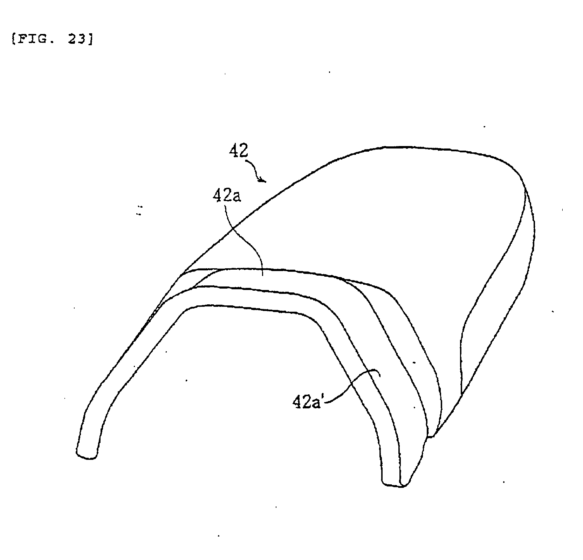

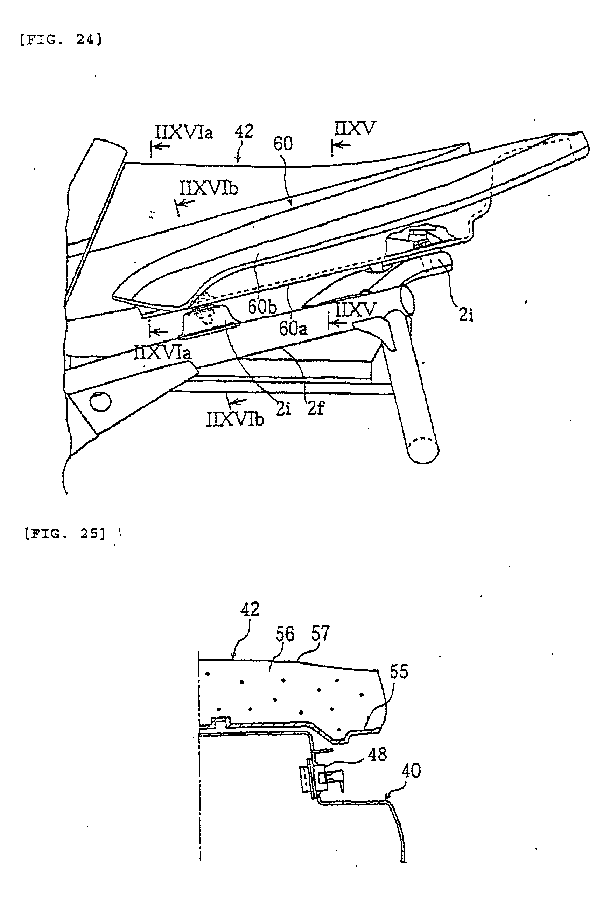

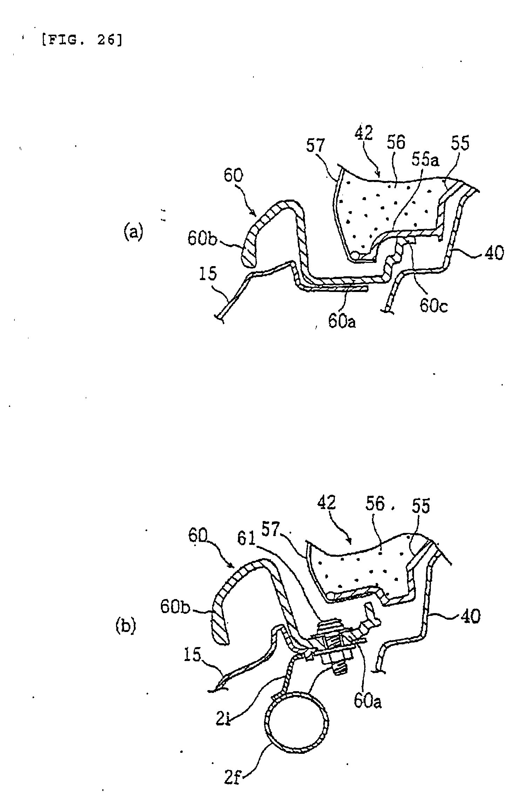

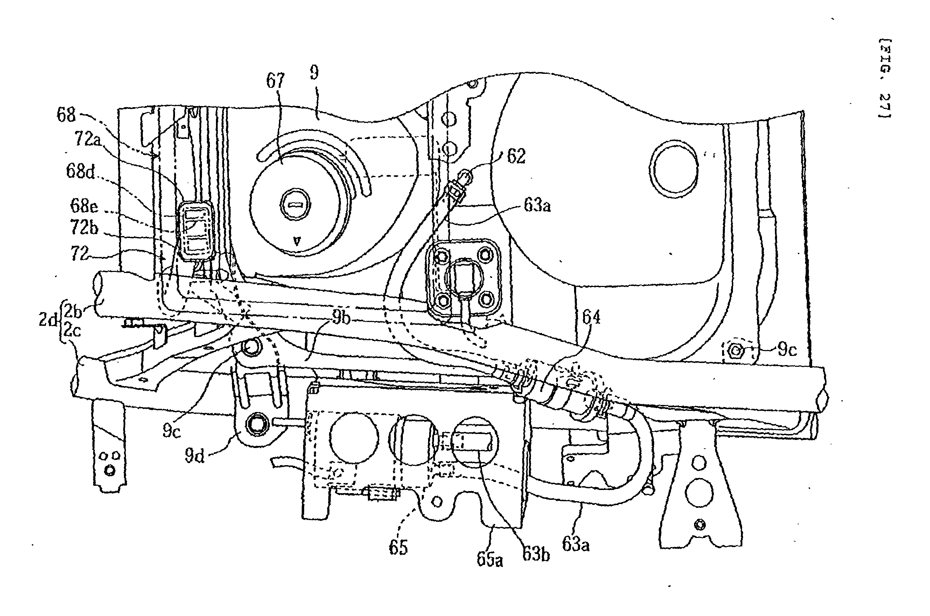

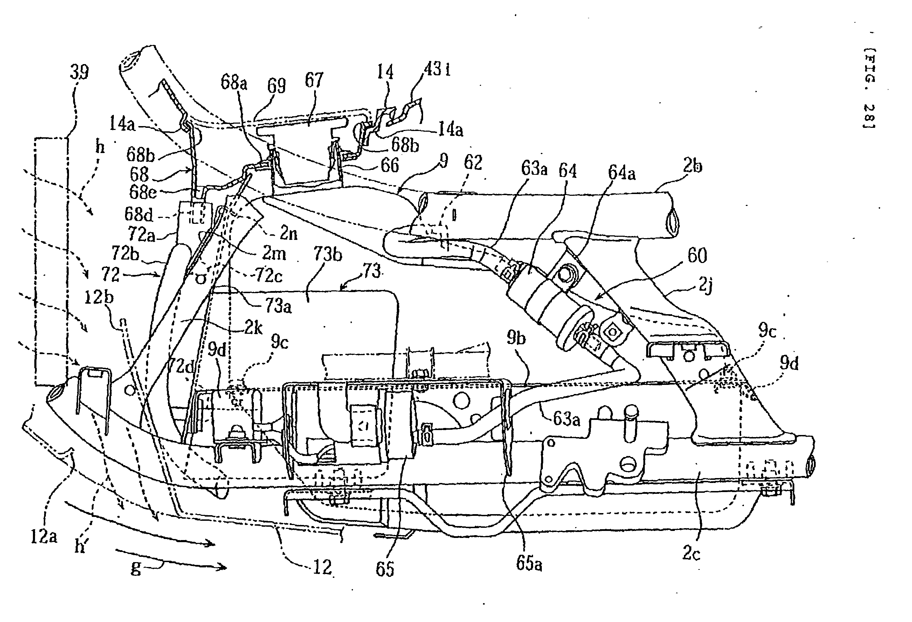

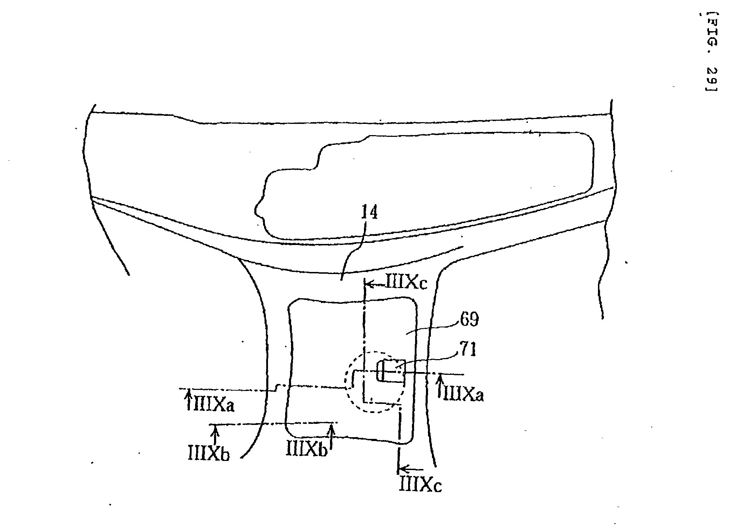

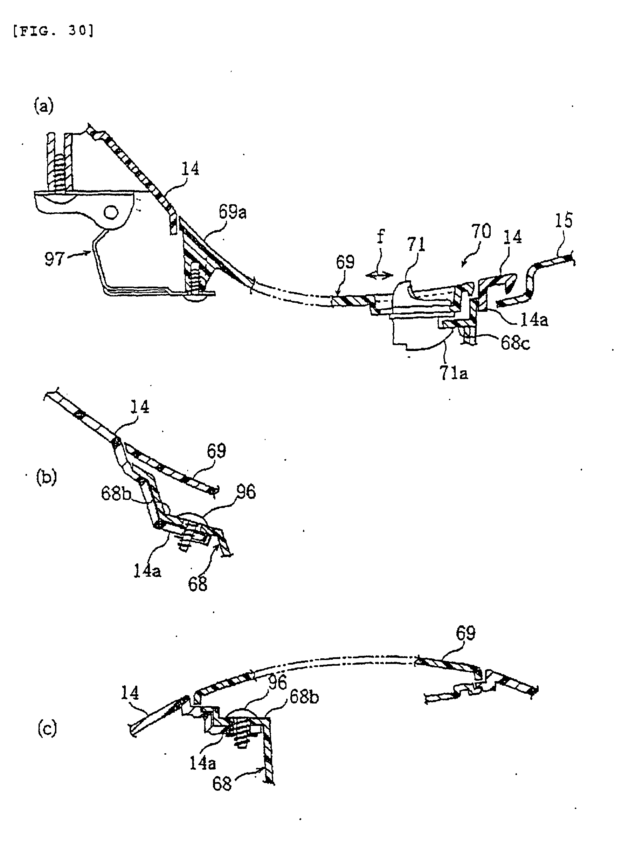

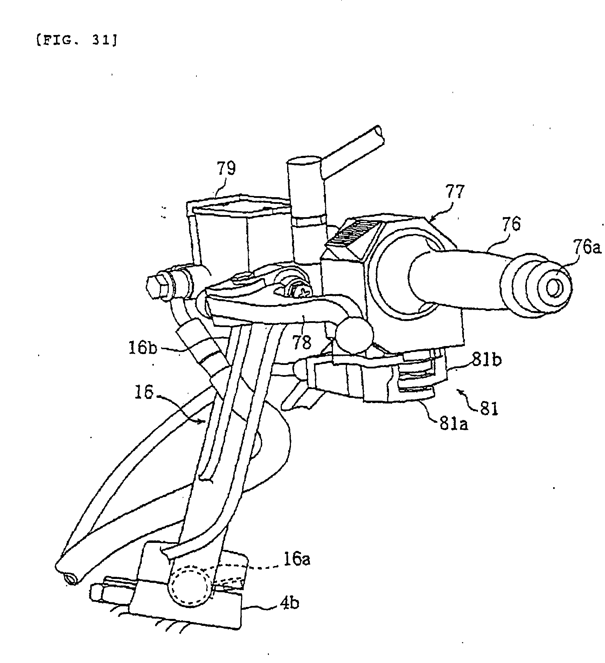

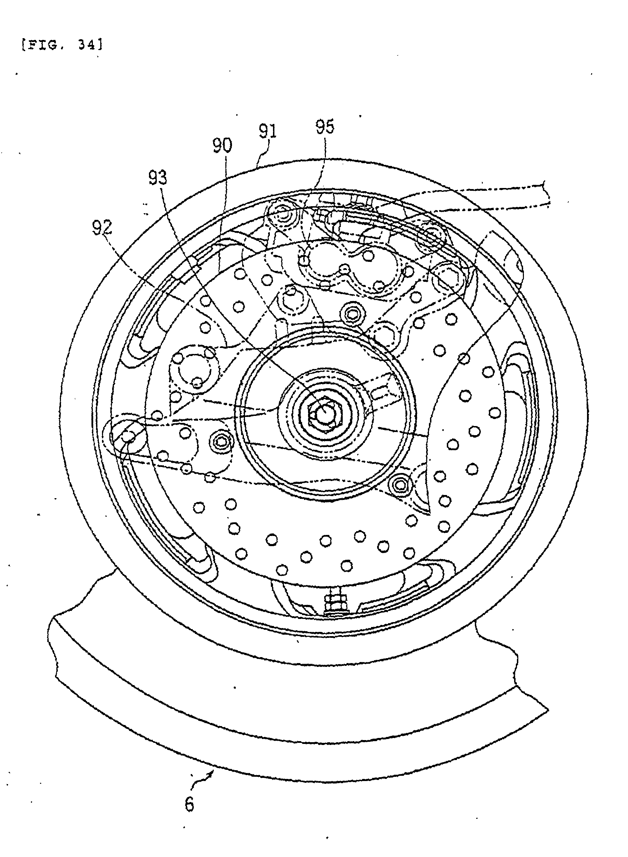

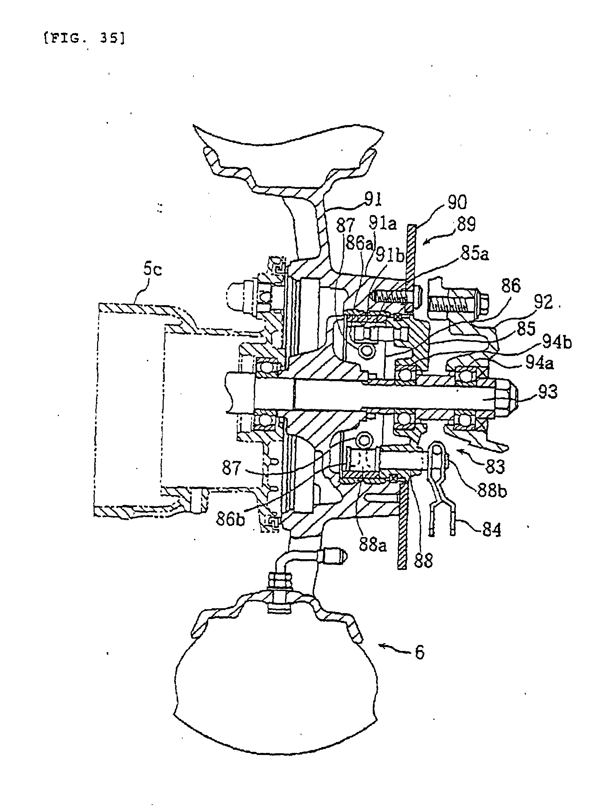

Fig. 1 is a left side view of the motorcycle. Figs. 2, 3, 4 are a front view, a left side view and a rear view of a body cover, respectively. Figs. 5, 6, 7, 8 are a front view, a left side view, a sectional left side view and an exploded perspective view of a screen, respectively. Figs. 9, 10 are a sectional left side view and a sectional plan view of right and left boxes, respectively. Fig. 11 is a sectional view taken along XI-XI of Fig. 10. Figs. 12,13 are left side views of the rear portion of the motorcycle. Fig. 14 is a plan view of a damper mechanism. Fig. 15 is a sectional front view of a seat hinge section. Figs. 16-19 are views showing a container box. Figs. 20-22 are sectional views showing mounting conditions of a seat. Fig. 23 is a perspective view of the seat. Fig. 24 is a side view of a tandem seat and a handle grip. Figs. 25, 26 are sectional views showing mounting conditions of a lamp and the handle grip, respectively. Figs. 27, 28 are a plan view and a side view around a fuel tank, respectively. Figs. 29, 30 are views showing a lid of the fuel tank. Figs. 31-33 are a side view and plan views of a parking brake mechanism according to the present invention, respectively. Figs. 34, 35 are a side view and a sectional rear view of the parking brake mechanism according to the present invention, respectively.

Terms "front, rear, right, left, up and down" in the following description refer to directions when viewed by the driver riding on the vehicle unless otherwise specified.

In figures, numeral 1 designates a scooter type motorcycle 1, having a general structure in which a front fork 4 supporting at the lower end a front wheel 3 is supported on the forward end of a body frame 2 for right and left steering movement; a unit swinging engine unit 5 is mounted to the rear of the body frame 2 for vertical swinging movement; a rear wheel 6 disposed at the inner side of the rear of the engine unit 5 is supported on the rear of the engine unit 5; a container device 7 is disposed upwardly of the engine unit 5; a seat device 8 is mounted on the upper side of the container device 7; a fuel tank 9 and a radiator 39 are mounted forwardly of the engine unit 5 successively, and the body frame 2 are enclosed by a plastic body cover 10

The body frame 2 of this motorcycle is arranged such that right and left side frames 2d are connected at front ends to a steering pipe 2a journaling a steering shaft 4a of the front tank 4; right and left grip supports 2f are fixed to the upper ends of right and left main brackets 2e extending from the rear ends of the right and left side frames 2d obliquely upwardly toward the rear; and the right and left grip supports 2f are connected to each other by a rear frame 2g in the shape of approximately a letter U as viewed from the rear. The right and left side frames 2d are arranged such that each of the frames has an upper and a lower side pipes 2b disposed vertically in the shape of approximately a letter L as viewed in profile, and these pipes are connected to each other by the main bracket 2e.

The upwardly extending steering shaft 4a provided on the front fork 4 laterally centrally of the vehicle body is journaled in the steering shaft pipe 2a of the forward end of the body frame 2 through bearings for right and left steering movement, and at the top end of the steering shaft 4a is bolted detachably a central section 16a of a steering handle 16 through a handle bracket 4b. The steering handle 16 comprises the central section 16a made of a steel pipe extending approximately horizontally, and right and left sections 16b, 16c rising from the right and left ends of the central section outwardly and obliquely upwardly and then extending horizontally. A plastic handle cover is attached such that it surround the steering handle 16 from the central section 16a through a right and left slanting section, and a handle cover 17 is adapted to rotate with the steering handle 16.

The body cover 10 comprises a cowling 11 covering the vehicle body from the front of the steering shaft 4a through the rear side of the front wheel 3, an under cover 12 covering the right and left lower sections of the vehicle body behind the cowling, a leg shield covering the rear side of the steering shaft 4a, a foot board 14 constituting a foot rest section, and a side cover 15 covering the right and left sides of the seat device 8.

On an opening defined by the top edge of the cowling 11 and the top edge of a leg shield 13 is mounted a plastic inner panel 18 so as to close the opening. In the laterally central portion of the inner panel 18 is formed a handle opening 18a through which the handle bracket 4b of the steering shaft 4a passes, on the right and left sides of the handle opening 18a are formed grid sections 18b. The grid sections 18b are composed of a plurality of horizontally extending slits 18c formed in the inner panel 18, and inside the grid sections 18b are disposed stereo-type speakers.

On the forward side of the inner panel 18 from the handle opening 18a and the grid sections 18b is formed a meter opening 18d, and in the meter opening 18d is provided fixedly a meter unit 19 comprised in one unit of a speed meter 19a, a fuel gauge 19b, a water temperature gauge 19c, etc. Forwardly of the meter unit 19 in the inner panel 18 is formed a meter visor 20 for preventing a dial plate of the meter unit 10 from being exposed directly to the light from the front and for acting as a guide member for guiding a running wind.

The meter visor 20 comprises a rear wall 21 formed integral with the inner panel 18 and rising from the meter opening 18d along the forward edge thereof, and a front wall 22 disposed so as to cover the front of the rear wall 21 with a given clearance therebetween, and is inclined obliquely upwardly toward the rear. A peripheral edge 21 a of the rear wall 21 is bent downwardly toward the front, and inside the peripheral edge 21 a of the rear wall is inserted a stepped peripheral edge 22a of the front wall with a gap a therebetween. Thus, a drain passage 23 is formed for drainage of rainwater, etc.

At the forward upper end of the cowling 11 is attached a large screen (wind shield plate) 24 such that it is inclined in a rising position at an angle a little larger then the meter visor 20 (it makes somewhat a smaller angle to a vertical line than the meter visor 20). The screen 24 is made of a transparent plastic, a lower edge 24a of which extends downwardly in an arc, and it has approximately a rectangular shape as a whole, with the lower edge 24a fastened fixedly to an upper edge 11a of the cowling 11 with a plurality of fastening bolts 25 inserted in bolt holes 24f. The fastening bolts 25 are covered by a colored plastic cover 26 and invisible from the outside. Numeral 11b designates a head light setting opening, numeral 11c a direction indicator setting opening, and numeral 11d an outside air introducing opening.

In the lower portion of the screen 24, that is, near the lower edge 24a of the screen 24 is formed an outside air introducing opening 24b. The outside air introducing opening 24b has approximately an inverse trapezoidal shape as viewed from the front. Right and left edges 24c of the outside air introducing opening 24b are bent rearwardly in a given radius of curvature (see the section a-a in Fig. 5), which prevents reduced rigidity due to the formation of the outside air introducing opening 24b.

On the rear surface of the screen 24 in a section lower than a line b which is an extension of the upper edge 24d of the outside air introducing opening 24b, is formed a colored (for example, black) coating 27 by screen printing, which makes the section of the screen 24 lower than an extension b translucent or opaque. In this embodiment, the lower section below the extension b is translucent in the upper part and changed gradually in its tone to be opaque toward the lower part. The coating may be formed by a method other than printing, for example, by affixing an opaque seal.

In a front view, an upper edge 20a of the meter visor 20 is located higher than the upper edge 24d of the outside air introducing opening 24b. A height difference c between the two upper edges 20a and 24d is larger toward the lateral center of the vehicle because the upper edge 20a of the meter visor 20 is approximately horizontal while the upper edge 24d of the outside air introducing opening 24b has an arcuate shape projecting somewhat downwardly. In a longitudinal sectional view, the height of the upper edge 20a of the meter visor 20 is set to the height approximately equivalent to that of a point on the extension of the upper surface of an uppermost guide vane 29a constituting a guide plate 29 of a louver mechanism 28 described later.

In the outside air introducing opening 24b is provided the louver mechanism 28 for substantially opening/closing the opening 24b and for guiding the outside air flow toward the driver's head during opening. The louver mechanism 28 comprises the stationary guide plate 29 for guiding the outside air flow toward the driver's head, a shutter plate 30 for opening/closing a substantial outside air introducing opening formed by the guide plate 29, and an opening/closing tab 31 used for opening/closing the shutter plate 30.

The guide plate 29 is an integral plastic molded component with an upper, an intermediate and a lower guide vanes 29a, 29b, 29c bent in the shape of arc so as to be convex slightly toward the front in plan view, spaced at given intervals and joined by vertically disposed right and left ribs 29d and center rib 29e. The guide vanes 29a-29c are approximately horizontal as viewed from the front while inclined obliquely upwardly as viewed from the side of the vehicle in a longitudinal cross section. The meter visor 20 is inclined obliquely upwardly toward the rear at an angle larger than the stationary guide plate 29. The guide plate 29 combined with the meter visor 20 allows the running wind to be directed toward the rider's head as well as flow regulation, preventing generation of turbulent flow and further of negative pressure behind the screen 24.

The lower guide vane 29c is formed at the forward edge with a stepped mounting flange 29f in an arcuate shape along its forward edge line. The upper surface of the mounting flange 29f is affixed to the backside of the lower edge 24e of the outside air introducing opening 24b of the screen 24 with an adhesive tape 33.

The shutter plate 30 is an integral plastic molded component with an upper vane 30a and a lower vane 30b of a strip-like shape extending laterally and joined together integrally with a step sized as large as the thickness of the vane. The shutter plate 30 is formed at both ends with pivotal sections 30c integrally, and the pivotal sections 30c are supported for rotation by shaft sections 29g provided on the right and left ribs 29d. Thus, the shutter plate 30 is adapted to open and close the air introducing opening formed by the upper, intermediate and lower guide vanes 29a, 29b, 29c.

Laterally centrally of the upper vane 30a of the shutter plate 30 at the rear edge thereof is formed integrally the opening/closing tab 31 for opening/closing the shutter plate 30. The opening/closing tab 31 consists of a closing tab section 31 a used for turning the shutter plate 30 from an opening state to a closing state and an opening tab section 31 b used for turning it from a closing state to an opening state. The closing tab section 31a is formed slanting obliquely upwardly toward the rear such that when the shutter plate 30 is in an opening position (angular position shown by solid line in Fig. 7), a finger can be inserted into a space between the front wall 22 of the meter visor 20 and the tab; and further, the opening tab section 31b is formed parallel to the shutter plate 30 and stepwise downwardly such that when the shutter plate 30 is in a closing position (angular position shown in double dot and dash line in Fig. 7), a finger can be inserted into a space between the screen 24 and the tab.

In the left end face of the shutter plate 30 as viewed from the rear of the vehicle is fitted one end 32a of a torsion type bias spring 32, and the other end 32b thereof is fitted in a spring support 29h of the left rib 29d. In this case, fitting positions of these ends 32a, 32b are set such that when the shutter plate 30 is rotated in an opening and a closing position, the shutter plate 30 is biased to an opening and a closing state, respectively.

In this embodiment, the outside air introducing opening 24b is formed in the screen 24, so that a running wind can be introduced into the rear side of the screen 24, preventing generation of negative pressure behind the screen 24, as well as action of forward force on the driver. In addition, in forming the outside air introducing opening 24b in the screen 24, the right and left edges 24c of the outside air introducing opening 24b are bent toward the rear, so that reduced rigidity can be inhibited especially on the right and left sides of the outside air introducing opening 24b and required rigidity for the screen 24 can be maintained as a whole in spite of the formation of the outside air introducing opening 24b.

On the other hand, as a result of the right and left edges of the outside air introducing opening 24 being bent, the visual field might be distorted when the driver looks forward through the bent portions of the screen 24. In this embodiment, however, the translucent or opaque coating 27 is formed on the backside of the screen 24 in a section (hatched section) lower than the lateral extension b of the upper edge 24d of the outside air introducing opening 24b. Therefore, the driver does look forward, not through the outside air introducing opening 24b of the screen 24, but through an area A in Fig. 1, avoiding the problem that the visual field might be distorted when the driver looks forward through the bent portions. In addition, the wind shield plate is made opaque in the region of the outside air introducing opening 24b, so that distinction between the region and the transparent section thereabove is apparent with an adequate aesthetic rhythm, improving outside appearance.

Further, the louver mechanism 28 is provided in the outside air introducing opening 24b, guide vanes 29a, 29b, 29c of the stationary guide plate 29 are inclined obliquely upwardly toward the rear in some degree, and the meter visor 20 is raised at an angle larger than the guide plate 29 so as to direct a running wind toward the rider's head and regulate the state of flow, inhibiting generation of the negative pressure and turbulence of the running wind, as well as noises due to the turbulence.

Furthermore, during running in a rainy condition, although rainwater as well as a running wind will enter the outside air introducing opening 24b, the rainwater is blocked by the front wall 22 of the meter visor 20 and seldom beats on the driver. The rainwater which hit against the front wall 22, flows along the surface of the front wall 22 downwardly of the vehicle body via the drain passage 23 through the gap a.

Moreover, the shutter plate 30 is provided, so that an outside air introducing passage formed by the guide plate 29 can be closed by the shutter plate 30 in a cold season, in which case, outside air flow toward the driver can be prevented. When the outside air introducing passage is to be closed, the shutter plate 30 need only be rotated upwardly by a finger pushing the underside of the closing tab section 31a, and when to be closed, rotated downwardly by a finger pressing the front side of the opening tub section 31 b. Thus, the shutter plate 30 can be opened and closed easily in a narrow space difficult to access.

Thus, the opening/closing tab 31 of the shutter plate 30 is configured as a stepwise shape consisting of a slanting closing tab section 31 a and the stepped opening tab section 31 b, so that the shutter plate 30 can be opened and closed in a narrow space between the screen 24 and the meter visor 20 with a simple construction. Further, the torsion type bias spring 32 is provided, so that the shutter plate 30 can be held reliably in an opening and a closing position. The pivot shaft of the shutter plate 30 may be extended to the right and left edges of the meter visor 20 to be held there for rotation, but this may complicate the construction, resulting in a poor outside appearance due to the extended shaft.

Now, description will be made on right and left boxes (container section) provided in the leg shield 13. Near the upper edge of the leg shield 13 and on the slightly right side of the lateral center thereof is disposed a main switch 34, and on the right side of the switch 34 is disposed a small right box (sub-container section) 35 and on the left side a relatively large left box (main container section) 36.

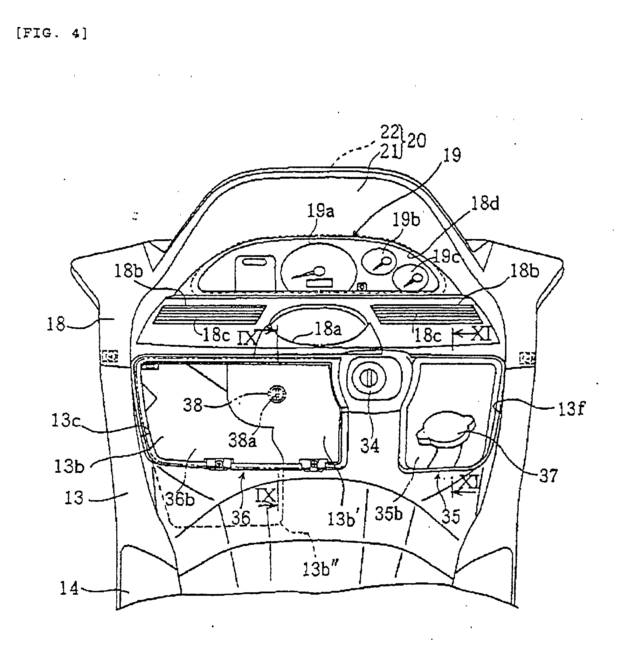

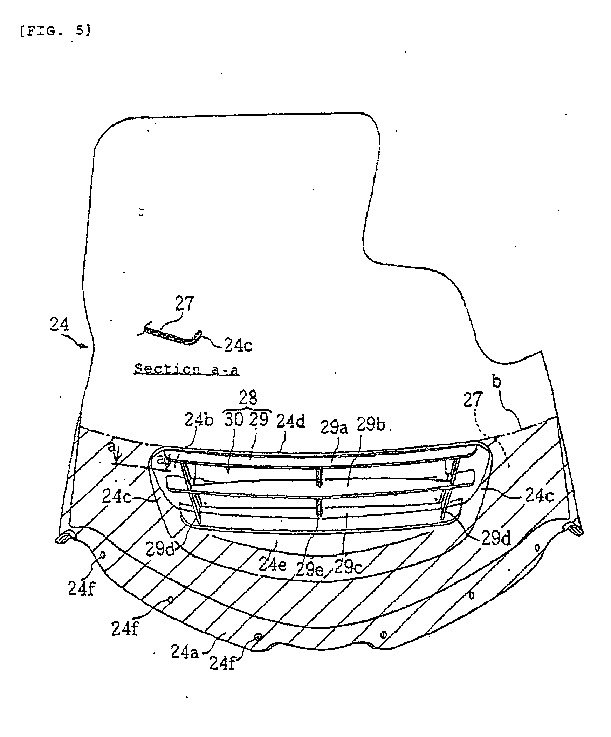

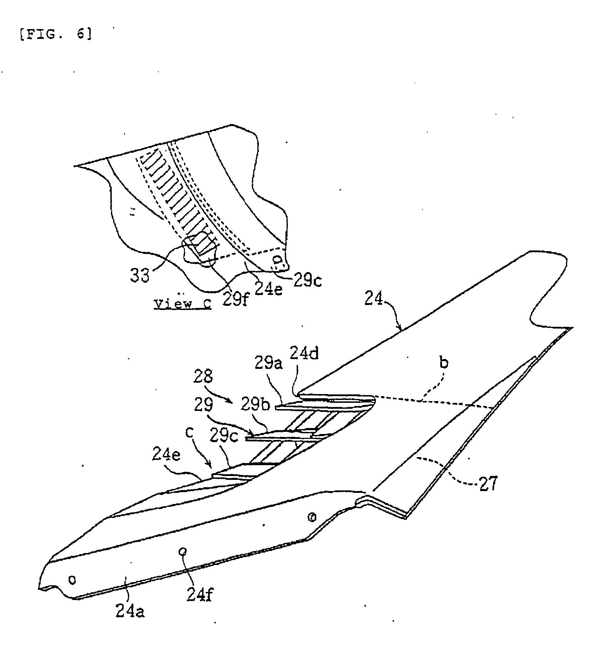

The left box 36 is arranged such that a rearwardly facing opening 13c of a box bottom (main box bottom) 13b formed in and recessed from the leg shield toward the front, is opened/closed by a left lid (main lid) 36b supported by a hinge 36a for back-and-forth swinging movement. A section 13b' of the box bottom 13b shown in Figs. 4, 9 is formed integral with the leg shield, but a section 13b" is formed by welding, extending the container space downwardly. The left lid 36b is provided with a locking mechanism 38. The locking mechanism 38 has a locking pawl 38b, which is adapted to be retracted in the body of the locking mechanism when pressed against a locking piece 13d of the leg shield 13 and to be returned automatically to the original position when passing over the locking piece 13d. To open the lid 36b, right and left tabs (not shown) on the locking mechanism 38 are pressed into the body of the locking mechanism to release engagement of the locking pawl 38b with the locking piece 13d. The locking mechanism 38 is arranged such that when a main key is inserted in a key hole 38a and turned to a locking position, then the locking pawl 38b is kept in locking relation with the locking piece 13d of the leg shield 13. The left lid 36b is removed in Fig. 4.

The right box 35 is arranged such that a box bottom (sub-box bottom) 35a is integrated with a right lid 35b, with an opening 13f of the leg shield 13 provided openably. The box bottom 35a is configured such that the bottom surface is inclined obliquely upwardly toward the front and the top side is opened, and thus, it is formed in a box-like shape with an open top. The box bottom 35a is supported detachably on a side wall 13a formed in the leg shield 13 for rotation through pins 35c, 35d. The pin 35c is formed on the side of the box bottom 35a, integral therewith and projecting therefrom. The lid 35b and the box bottom 35a are removed in Fig. 4.

On the other hand, the pin 35d is mounted removably. Specifically, the pin 35d is inserted in a shaft hole 35e of the box bottom 35a and a shaft 35f is then passed through the pin 35d to expand the end portion thereof for fixation of the pin 35e into a support hole 13e of the side wall 13a. This allows the back-and-forth swinging movement of the right box 35 about the pins 35c, 35d.

Inside the right box 35 is located a cooling water feed cap for the radiator 39. The feed cap 37 is adapted to face to the outside when the right box 35 is removed, and in this condition, cooling water can be supplied easily by removing the feed cap 37. To remove the right box 35, the shaft 35f is pushed further inward to release expansion of the end portion of the pin 35d, and then, the shaft 35f and pin 35d are pulled out simultaneously, providing easy removal of the right box 35.

In the embodiment described above, the container section is divided into right and left boxes, the right box 35 is arranged such that the box bottom 35a is integrated with the box lid 35b, it can be removed easily from the leg shield 13, and when the right box 35 is removed, the cooling water feed cap 37 for the radiator 39 is adapted to face to the outside, thereby providing easy supply of the cooling water.

Now, the seat device 8 and the container device 7 will be described in detail. The seat device 8 is of a longitudinally divided type comprised of main seat (front seat) 41 for a rider and a tandem seat (rear seat) 42 for co-rider. An upper opening 40c of a container box 40 of the container device 7 is adapted to be opened and closed by a lid hinge plate 43 for supporting the main seat 41.

The container box 40 has a length equivalent to the entire length of the seat device for two crews, comprises two plastic molded members joined together as described later, including a front box section 40a located under the main seat 41 and a rear box section 40b located under the tandem seat 42, and the front box section 40a and the rear box section 40b are adapted to hold full-face type helmets A, B.

The container box 40 is inclined downwardly toward the front as a whole, and a front bottom 40e corresponding to the front box section 40a is formed expanding downwardly to a large extent to accommodate the helmet A with the help of the lid hinge plate 43 and located in a position at the height of which it nearly covers the front of a cylinder head cover 5a of the engine unit 5. The front box section 40a is fastened fixedly to the side pipes 2b with bolts 44a, 44b at four places, the front and the rear thereof.

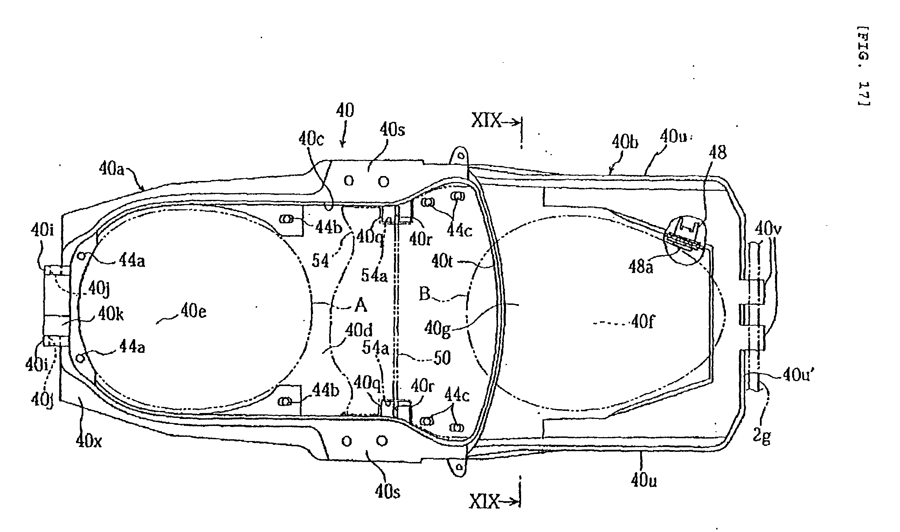

The rear box section 40b has approximately a rectangular shape in plan view. That is, as shown in Fig. 17, right and left side walls 40u and a rear side wall 40u' correspond to the right and left sides and the rear side of the rectangular construction in plan view. A rear bottom 40f of the rear box section 40b is formed expanding downwardly, and a ceiling 40g is formed in a mountain-like shape (domed shape) like a tunnel as a whole. Thus, the helmet B or a rectangular article such as a suit case can be held therein. The rear box section 40b is fixed, at the rear bottom 40f near its forward end, to the side pipes 2b with four bolts 44c, and support bosses 40v on the rear end wall are supported on the rear frame 2g. To install the container box 40, the support bosses 40v are first supported on the rear frame 2g and then, the bottom of the container box is fastened fixedly to the side pipes 2b with mounting bolts 44a-44c.

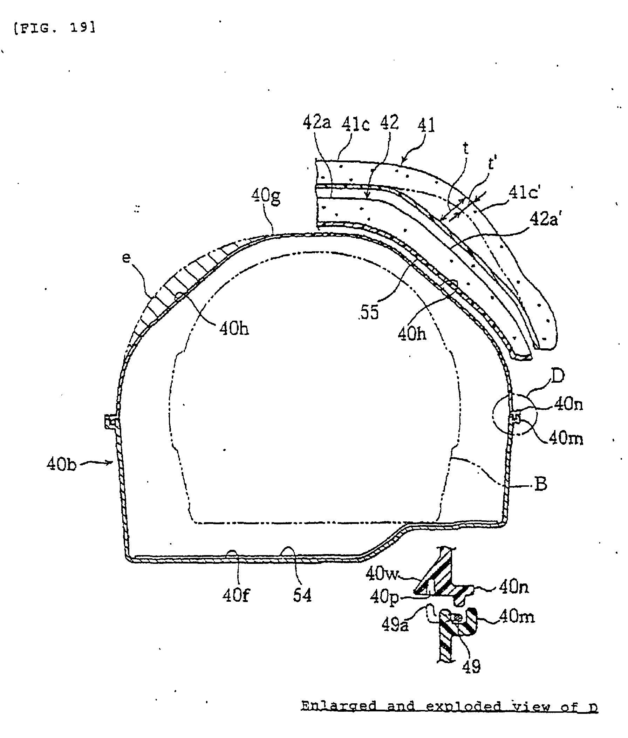

The ceiling 40g is configured as a mountain-like shape having straight slanting surfaces 40h, with a hatched area of a domed ceiling e, shown in Fig. 19 by double dot and dash line, being cut off. As a result of the ceiling having slanting surfaces 40h with the hatched area eliminated, the thickness of a cushion of the main seat 41 disposed overlying the ceiling, can be secured, maintaining a comfortable riding feeling, as described later.

In addition, at the rear of the ceiling wall 40g is provided a lamp 48 for lighting the inside of the rear box section 40b and the front box section 40a. The lamp 48 is fixed to the rear side surface of the ceiling wall 40g in an inserted manner from the outside, the lens surface 48 of which is formed flat. The lamp 48 described above will eliminate a problem that the rear box section 40b is dark and difficult to look in.

Further, the lamp 48 is disposed in a region such as a portion of the ceiling wall 40g that doesn't restrict the substantial housing capacity, avoiding a problem of decreased housing capacity due to formation of the lamp 48. In addition, the lamp 48 is disposed in a region such as the ceiling wall 40g against which contained articles are not likely to bump, preventing the lamp from being damaged by the contained articles. Further, its lens surface 48a is made flat with minimum inside projection, which also prevents reduction in housing capacity, as well as interference of the articles in the rear box section 40b with the lamp 48.

The rear box section 40b is arranged such that a mating opening edge 40m of the rear bottom 40f and a mating opening edge 40n of the ceiling wall 40g are brought in abutment with each other and joined together by wire welding process. Specifically, a heating wire 49 is placed between the mating opening edges 40m and 40n and energized in this condition; then plastic edges are melted by the heat generated; and they are bonded during solidification.

In forming the tunnel type rear box section 40b described above, a pair of vertically separated sections of the ceiling wall 40g and the bottom 40f are joined together by wire welding process, thereby improving water-tightness as well as quality of outside appearance. In this motorcycle, since the right and left side walls 40u and the rear wall 40u' correspond to the sides of the rectangular construction in plan view, the wiring route on the opening edges 40m, 40n assumes approximately a rectangular shape, so that the wire 49 for welding can be arranged approximately in a straight line, providing an easy and effective wiring with minimum length.

Furthermore, regarding terminals 49a of the welding wire 49, pockets 40p are formed in ribs 40w on the inside surface of the ceiling wall 40g or the rear bottom 40f, and the terminals 49a are inserted in the pockets 40p. This feature prevents the terminals 49a of the wire 49 from being exposed in the container box, thereby avoiding poor outside appearance, as well as interference during housing work.

Moreover, approximately centrally of the container box 40 in the longitudinal direction are formed integrally a partition bosses 40q for supporting a partition plate 50 detachably. The partition boss 40q is formed integral with the side wall, in the shape of a square bar extending from a bottom wall 40d to the edge of the opening 40c along the inside surface of the side wall, and formed with a slit 40r for insertion of the partition plate 50 from the upper side. The partition plate 50 is provided in the container box 40, thereby preventing contained articles from moving in the container box 40 while sliding back and forth or rolling. The partition plate 50 is effective especially when a longitudinally elongated container box is provided whose length is equivalent to the entire length of the tandem seat as in this motorcycle.

On the bottom wall 40d of the container box 40 is laid an elastic sheet-like mat 54. In the corresponding portions of the mat 54 to the partition bosses 40g are formed cutouts 54a, which are engaged with the partition bosses 40q. Thus, the mat 54 is positioned in place longitudinally, preventing movement thereof reliably.

At the top edges of the partition bosses 40q are formed right and left support flanges (seat load receiving sections) 40s extending outwardly, that is, the partition bosses 40q are located adjacent to the load receiving sections. On the backsides of the right and left support flanges 40s are bolted right and left seat locks 51. Hooks 43j fixed to the lid hinge plate 43 are locked in the seat locks 51, and the weight of the crew is adapted to act on the seat locks 51 and in turn the flanges 40s.

Remote control operation cables 51a of the right and left seat locks 51, extending forwardly from the sides of the container box 40 along the side pipes 2b, are connected to the main switch 34 after assembled into one operation cable through a distributor (not shown) with an automatic regulating mechanism. That is, when the main key is turned to a seat opening position while inserted in the main switch 34, the right and left seat locks 51 are unlocked simultaneously.

The distributor has the function of automatically eliminating timing difference of unlocking between right and left seat locks 51, such as connecting the right and left operation cables to rotary pulleys, regulating the timing difference (difference in length between operation cables 51 a, etc) by the rotation of the pulleys, and synchronizing unlocking of the right and left locks 51.

In this motorcycle as described above, seat locks 51 are provided symmetrically on both sides of the container box and the seat is locked at two places, the right and the left, preventing play (rattling) of the seat as in the case of the seat lock being provided only on one side. In addition, because of the placement of the partition bosses 40q, the support flanges 40s to which are mounted the seat locks 51 have an improved rigidity enough to withstand the weight of crews exerted on the seat locks 51, also preventing play of the seat.

In addition, a pair of right and left operation cables 51 a for seat locks 51 are put together into one operation cable through a distributor with an automatic regulating mechanism, so that regulation during assembling becomes easy in spite of the outfitting of two seat locks 51, improving assembling work.

The section of the opening 40c of the container box 40 corresponding to the front box section 40a is inclined to be higher toward the rear as a whole when viewed in profile, and the portion corresponding to the front end of the rear box section 40b has a rising shape which rises at a sharp angle. The opening 40c is adapted to be opened/closed by the lid hinge plate 43.

The lid hinge plate 43 is made of plastic and comprises a bowl-like box section 43a covering the slanting portion of the opening 40c and a lid section 43b covering the rising-shaped section. The box section 43a is formed in an upwardly expanding shape having a depth sized as large as approximately half the helmet A is covered, and changes its depth to be shallower toward the rear to match the inclination of the opening 40c. The ceiling wall surface of the box section 43a is formed flat to carry the main seat 41.

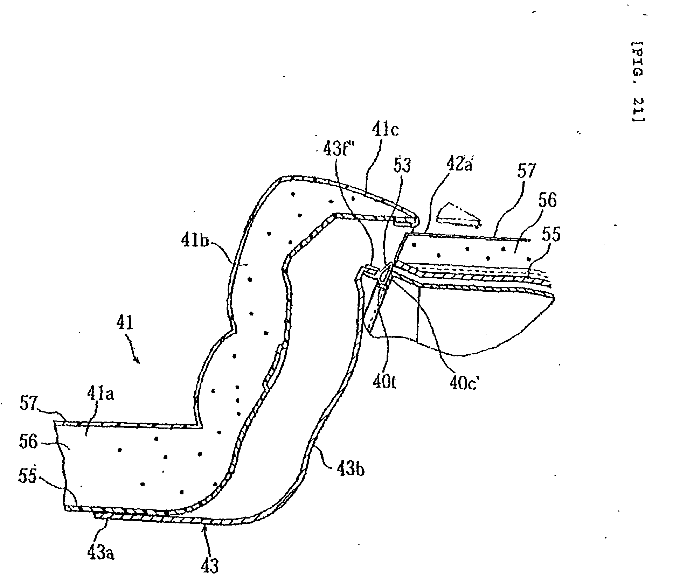

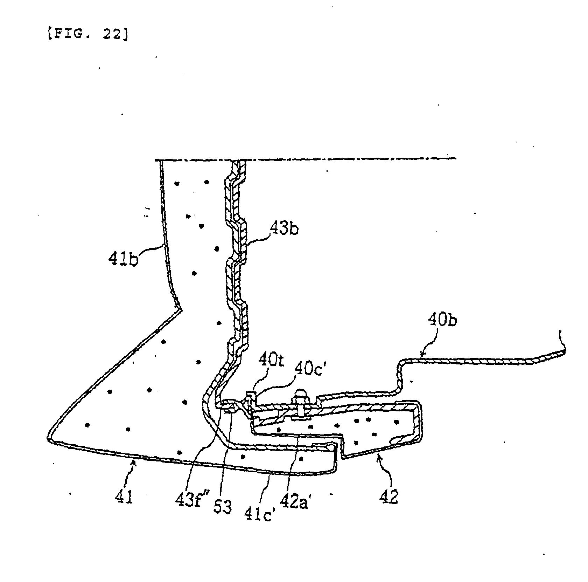

On the peripheral portion of the box section 43a and lid section 43b facing to the opening 40c is provided a sealing rib 43f. A portion 43f of the sealing rib 43f in the box section 43a is extended directly downwardly (see Fig. 20 (b)), and a portion 43f in the lid section 43b is bent rearwardly (see Figs. 21, 22). The sealing rib 43f is fitted with a rubber sealing packing thereon, and a sealing packing 53 is adapted to be pressed against a sealing surface 40c' of the opening 40c between the lid hinge plate 43 and the opening 40c of the container box 40.

On the opening edge 40c of the container box 40 is formed a draining rib 40t bent forwardly for preventing ingress of rainwater, etc into the container box 40 even if they pass through a gap between the sealing packing 53 and the sealing surface 40c'. The portion of the draining rib 40t especially in the region of the mountain-shape ceiling wall 40g acts as a trough. The draining rib 40t acting as a trough as described above improves reliability of water-tightness.

On the lid hinge plate 43 at the forward end of the box section 43a is screwed integrally a support section (sheet metal hinge plate) 43c, and downwardly-bent right and left side walls 43g of the support section 43c are supported for rotation through a hinge pin 45 by a pair of right and left hinges 40i provided on the container box 40 at its forward end. Numeral 43i designates a cover fixed to the lid hinge plate 43.

The lower edges of pin holes 40j of the hinge 40i are located lower than the upper edge 14d of the foot board 14 by a dimension d, therefore the height of the upper edge of the foot board 14 can be made lower, and the mating clearance between case assemblies can be made small.

On the other hand, since the position of the lower edges of the pin holes 40j is set to be lower by a dimension d as described above, insertion of the hinge pin 45 from the side of the vehicle becomes difficult in assembling the lid hinge plate 43, which might cause poor assembling work. In view of the foregoing, in this motorcycle, the hinge pin 45 is configured in a stepped shape having a small-diameter section 45a supported by the left hinge 40i and a large-diameter section 45b supported by the right hinge 40i.

The hinge pin 45, which is configured in a stepped shape as described above, can be inserted obliquely at an angle θ with respect to the horizontal line as shown in double dot and dash line in Fig. 15, therefore a clearance is produced between the upper edge 14d and the lower edge of the hinge pin 45 by a dimension D, so that the hinge pin 45 can be inserted even when the lower edges of the pin holes 40j are lower than the upper edge 14d of the foot board 14, enabling assembling of the lid hinge plate 43.

In addition, on the container box 40 between the right and left hinges 40i thereof is formed a guide surface 40k for guiding the small-diameter section 45a of the hinge pin 45 to the pin hole 40j of the left hinge 40i during insertion. This feature allows the forward end of the hinge pin 45 to be guided to the left pin hole 40j with the help of the guide surface 40k when the hinge pin 45 is inserted obliquely from the right pin hole 40j, thereby effecting easier assembling work.

On the right side wall 43g of the support section 43c is formed a damper connecting piece 43d bent integrally, and to the damper connecting piece 43d is connected through a ball joint 46c a piston rod 46a of a damper 46 for reducing operating force required in rotating the main seat 41 upwardly. The damper 46 is disposed along the upper side pipe 2b on the right side, with a bracket 46b at the forward end being supported on a damper bracket 2h of the body frame for vertical swinging movement.

Further, on the left side wall 43g of the support section 43c is formed a switch support piece 43e bent integrally, and to the switch support 43e is attached a damper switch 47 for lighting the lamp 48 when the opening 40c of the container box 40 is opened, with a detection terminal 47a directed downwardly. The detection terminal 47a is in contact with a switch activating surface 40x formed on the forward end of the container box 40, and when the lid hinge plate 43 is rotated in the direction of opening, it is turned on to light the lamp 48.

Here, the switch activating surface 40x is an arcuate region 40X of a radius R with center at the hinge pin 45. A region 40x' adjoining the switch activating surface 40x changes its radius with center at the hinge pin 45 gradually to be larger than the previous value R. The detection terminal 47a is adapted to slide on the activating surface 40x when the lid hinge plate 43 is substantially in a closed state, and to move out of the activating surface 40x when the lid hinge plate 43 is opened wider. Since the activating surface 40x is formed in an arcuate shape of a constant radius R as described above, it is certain that the detection terminal 47 is turned off when the lid hinge plate 43 is substantially in a closed state, and thus the damper switch 47 is able to detect reliably the opening/closing state of the main seat 41.

Further, in this motorcycle, an assembling procedure can be adopted in which the damper 46 and the damper switch 47, for example, are sub-assembled beforehand and then the main seat 41 is incorporated in the sub-assembly, thereby improving assembling work.

Either of the main seat 41 and the tandem seat 42 of the seat device 8 is arranged such that a cushion material 56 is placed on a bottom plate 55 and covered with a skin 57. The main seat 41 is comprised of a seat section 41 a and a back rest 41 b, and the seat section 41 a is mounted on the ceiling surface of the box section 43a in the lid hinge plate 43 for back-and-forth movement, that is, for adjustment of the longitudinal position of the main seat 41. Specifically, laterally extending elongated holes 43h are formed in the lid hinge plate 43; nuts 58 are disposed on the bottom plate 55 of the main seat 41 at places corresponding to the elongated holes 43h such that the nuts do not move longitudinally and rotationally; and bolts 59 are screwed in the nuts from the lid hinge plate 43 side.

On the main seat 41 at the upper end of the back rest 41 b is formed an eaves section (rear edge of the front seat) 41c bent rearwardly. The eaves section has a domed shape as a whole, and is adapted overlap the insert section (forward edge of the rear seat) at the forward end of the tandem seat 42 in the vicinity of the forward edge of the ceiling wall 40g of the rear box section 40b. The bottom plate 55 of the tandem seat 42 is configured in a mountain-like shape along the ceiling wall 40g of the rear box section 40b. Sections 42a' of an insert section 42a corresponding to the right and left slanting surfaces 40h are formed stepwise, that is, underlying sections of the tandem seat 42 under the main seat 41 are formed thinner than the other section, and thus, a cushion thickness t of portions 41 c' of the main seat 41 covering the stepped sections 42a' is larger than a thickness t' of the same portions expected when there would be no steps in the tandem seat.

As described above, the forward edge of the tandem seat 42 is formed stepwise along the ceiling wall 40g of the rear box section 40b, and the eaves section 41 c of the main seat 41 is adapted to cover the stepped sections. Therefore, the cushion thickness t of the portions 41c' in the eaves section 41c covering the stepped sections 42a', can be made larger significantly than the thickness t' of the same portions expected when there would be no steps in the tandem seat, and thus cushion properties of the portions contacted by the thighs of a crew on the rear seat can be secured, improving a riding feeling. Fig. 21 shows the main seat 41 being mounted for adjustment to the most forward position with respect to the lid hinge plate 43.

Between the right and left grip supports 2f of the body frame 2 is provided fixedly a handle grip 60 in bridging relation. The handle grip 60 has a base section 60a in the shape of channel U in cross section, and a gripping section 60b adjoining to the outer edge of the base section and bent downwardly; it is made of aluminium alloy by casting, in the shape of a letter U as a whole, surrounding the right and left and the rear side of the tandem seat 42 in plan view; and the base section 60a is fastened fixedly with bolts 61 to the support brackets 2i fixed to the grip supports 2f.

On the handle grip 60 at the inside circumferential edge of the base section 60a is formed a load receiving section 60c extending inwardly and upwardly, and the outside circumferential edge 55a of the bottom plate 55 of the tandem seat 42 is placed on the load receiving section 60c in contact therewith. Thus, the weight of he crew on the rear seat exerted on the tandem seat 42 is received by the handle grip 60.

As described above, since load on the tandem seat 42 is received by the rigid handle grip 60, special brackets for receiving the load on the tandem seat is unnecessary for the body frame, effecting simplified construction.

Now, detailed description is made on discharging and heat shielding structures for overflowing fuel from the fuel tank 9. The fuel tank 9 has approximately a rectangular shape in plan, with upper and lower tank halves coupled by flange 9b, and a width spanning between the right and left side frames 2d, the rear of which extends under the front box section 40a of the container box 40 in creeping relation. Also, the fuel tank 9 is disposed between the right and left side frames 2d and surrounded by the foot board 14 and the under covers 12, and the flange section 9b is fastened fixedly at four corners to tank brackets 9d. The tank brackets 9d are bolted to brackets on the lower side pipes 2c.

Approximately laterally centrally of the fuel tank 9 and at a little forward portion thereof is inserted a fuel drawing pipe 62 into the fuel tank 9. The drawing pipe 62 is connected at the top end to a fuel drawing hose 63a, which is laid on the left side of the vehicle and connected to a fuel pump 65 mounted on the left side of the vehicle body, with a filter 64 interposed in the middle thereof. The fuel supply hose 63b connected to a delivery port of the fuel pump 65 is connected to a carburetor 5b of the engine unit 5. The filter 64 is fixed to a bracket 64a attached to a left reinforcing bracket 2j connecting the upper and lower side pipes 2b, 2c, and the fuel pump 65 is fixed to a bracket 65a attached to the left lower side pipe 2c.

On the forward upper surface of the fuel tank 9 at the highest portion is connected a fuel supply pipe 66, and on the top opening of the fuel supply pipe 66 is mounted removably a key-lock type fuel cap 67. On the upper part of the fuel supply pipe 66 is fitted a plastic filler cover (overflow receiving section) 68 for receiving overflowing fuel so as to surround the fuel supply pipe 66 through a rubber sealing ring 68a in oil-tight relation. The filler cover 68 is in the shape of approximately a pan, an opening edge 68b of the outside circumferential wall of which is fitted on a support opening 14a formed stepwise on the foot board 14 and fastened fixedly thereof with a plurality of tapping screws 96.

Also, the top end opening of the filler cover 68 can be opened and closed by a lid 69, the forward edge 69a of which is supported by the foot board 14 for rotation through a hinge metal 97. The lid 69 is provided at the rear edge with a slide type lid locking mechanism 70. The locking mechanism 70 is arranged such that a slider 71 is provided for sliding movement in the directions of the arrow f and biased to a locking position shown by solid line in Fig. 29. The slider 71 prevents rotation of the lid 69 with its locking piece 71 a being engaged with the underside of a locked section 68c of the filler cover 68 when in a locking position, and allows rotation of the lid 69 with the locking mechanism being unlocked when slided to the left in the figure.

As described above, the slider 71 of the lid locking mechanism 70 is engaged with the locked section 68c formed on the filler cover 68 fitted on the fuel supply pipe 66 of the fuel tank 9 so as to prevent rotation of the lid 69, improving fitting quality of the lid 69.

In the bottom wall of the filter cover 68 at the forward left corner is formed a fuel outlet (discharge section) 68d extending downwardly in the shape of a rectangular column. The fuel outlet 68d has approximately a rectangular shape in a transverse sectional view (see Fig. 27), and ribs 68e are formed integral with the outlet so as to partition the rectangular construction. This ribs 68e allow the fuel outlet 68d to be larger in size and prevent foreign matters from clogging up the fuel outlet 68d while maintaining the large discharging sectional area.

Under the fuel outlet 68d is provided an overflow pipe (discharge hose) 72 extending downwardly along the forward left corner of the fuel tank 9. The overflow pipe 72 is a plastic blow-molded product comprised of a guide section 72a in a rectangular shape in plan view in which is inserted the fuel outlet 68d, and a guide tube 72b of a circular cross section extending downwardly under the guide section 72a.

The overflow pipe 72 is fixed to the body frame 2 prior to installation of the fuel tank. Specifically, the overflow pipe is supported on the body frame 2 by an engagement projection 72c, provided on the guide tube 72b near the top end, being inserted in a connecting bracket 2m of the body frame, and by a lower engagement projection 72d, provided at the lower portion thereof, being inserted in a fuel tank support bracket 9d. The connecting bracket 2m is a reinforcement member for connecting a right and left reinforcement brackets 2k for coupling the upper and lower side pipes 2b, 2c.

As described above, the overflow pipe 72 is attached to the body frame 2 beforehand and the fuel tank 9 fitted with the filler cover 68 is mounted on the body frame 2, therefore the fuel outlet 68d in the filler cover 68 is inserted in the guide section 72a, allowing piping in a narrow space and improving assembling work of the fuel tank, overflow pipe, etc.

The front of the fuel tank 9 is covered with a heat shielding sheet 73 of a rubber plate. The heat shielding sheet 73 has the shape of approximately a letter C in plan view, comprised of a front section 73a covering the front of the fuel tank 9 and right and left sections 73b bent at the right and left edges of the front section 73a and covering the right and left sides of the fuel tank 9. The front section 73a of the heat shielding sheet 73 has a vertical dimension spanning between the upper and lower side pipes 2b, 2c; is disposed slanting rearwardly such that the clearance between the sheet and the fuel tank is smaller at the upper front of the fuel tank 9 than at the lower front thereof; and is engaged at the upper and lower ends with the upper and lower side pipes 2b, 2c.

Also, the front section 73a of the heat shielding sheet 73 is supported at the upper part by an engagement piece 2n, which is formed at the upper end of the connecting bracket 2m and bent rearwardly, passing through the upper part of the front section, and held at the lower part between the projection 72d and the tank bracket 9d. The right and left sides 73b are set to a size allowing coverage of approximately two thirds of the lower forward sides of the fuel tank 9, and supported fixedly on the lower side pipes 2c at the insides thereof. The overflow pipe 72 may be attached to the heat shielding sheet 73 and to the vehicle body beforehand.

In addition, in the under cover 12 at a portion thereof behind the radiator 39 is provided a cooling mechanism for drawing the cooling air passing through the radiator 39, downwardly of the under cover 12, Specifically, a wind outlet 12a is formed on the bottom of the under cover 12 and rearwardly of the radiator 9, and a wind guide wall 12b rising obliquely upwardly toward the front or the radiator 39 is formed by bending. The wind outlet 12a is formed on the bottom of the under cover and substantially invisible from the side of the vehicle.

In this motorcycle, since the fuel tank 9 is mounted rearwardly of the radiator 39, a cooling wind at elevated temperature after cooling the radiator 3 will hit against the fuel tank 9, which might raise the temperature of the fuel tank 9, but the foregoing heat shielding sheet 73 and cooling mechanism allow the temperature rise of the fuel tank 9 to be minimum.

Specifically, during running, negative pressure is generated between the under cover 12 and the road surface by a running wind g flowing therethrough, and as a result of the wind outlet 12a being open to the region of the negative pressure, a cooling wind h which has passed through the radiator 39 and raised its temperature, is drawn effectively downwardly of the under cover 12 from the wind outlet 12a as the amount of the cooling wind h flowing through the radiator 39 increases. The heat transferred by the cooling air flowing toward the fuel tank 9 is blocked by the heat shielding sheet 73 and not likely to be transmitted to the fuel tank 9, thus preventing a temperature rise of the fuel tank 9.

The wind guide wall 12b and the heat shielding sheet 73 also act as protection members for protecting the fuel tank 9 from flying stones from the front. In addition, the right and left reinforcing brackets 2k are coupled by the connecting bracket 2m and the upper part of the heat shielding sheet 73 is fixed to the connecting bracket 2m, so that the connecting bracket 2m help improve the rigidity of the body frame 2.

Outside the right side frame 2d and on the opposite side of the vehicle body from the fuel pump 65, is mounted a battery. An opening for the battery is formed so as to extend from the horizontal foot rest wall of the foot board 14 to the vertical wall, and a lid for opening/closing the opening has the shape of a letter L in a transverse cross section. The bottom wall constituting a battery box for supporting the battery is fixed to the lower side pipe 2c.

On the left section 16b of the steering handle 16 are fitted a left grip 76, a switch case 77, a rear brake lever 78 and a rear master cylinder 79 in this order from the outer end thereof. Numeral 76a designates a grip cap for covering the opening of the left grip 16 ornamentally. The switch case 77 encloses various switches such as a direction indicator switch 77a, head light switch 77b, etc.

On the bottom of the switch case 77 is mounted a parking operation mechanism 81 for a parking brake device 80. The parking operation mechanism 81 comprises a holder 81a fixed to the bottom of the switch case 77, and a lever body (parking lever) 81b supported by the holder 81a for rotation about a pair of vertically divided pins 81d. The lever body 81b is connected through a parking cable 82 to a parking brake mechanism 83 provided on the rear wheel 6. The forward end of an outer cable 82a of the parking brake cable 82 is fitted in a cable engaging section 81c of the holder 81a, and an engaging pin 82c fixed to the forward end of an inner cable 82b is fitted in the lever body 81b near the center of rotation thereof.

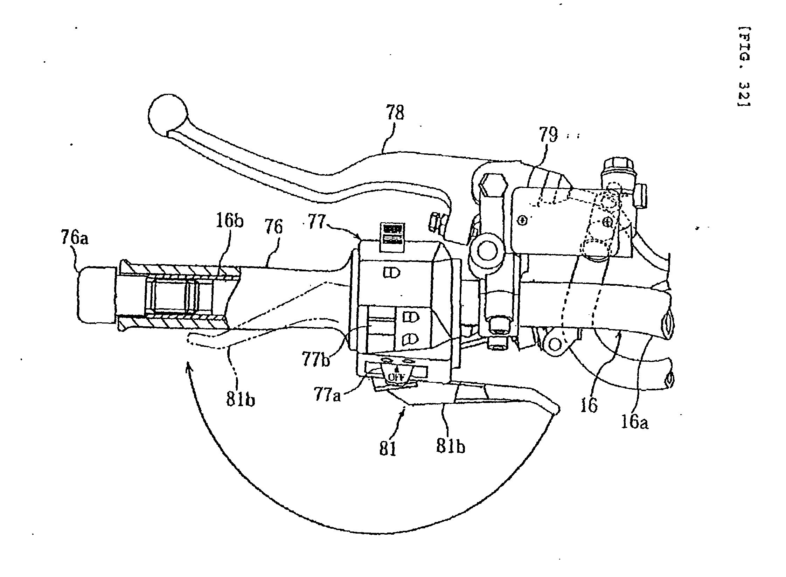

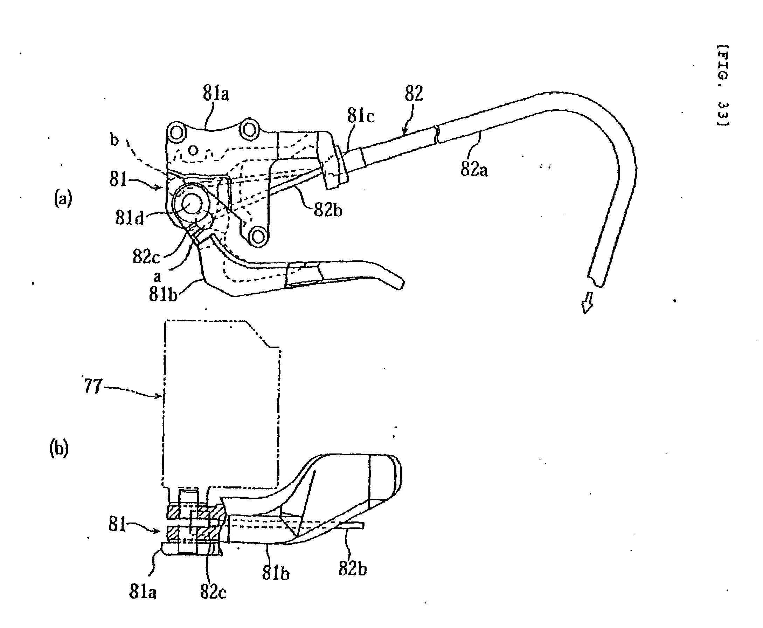

When the lever body 81b is rotated from a non-operating position shown by solid line in Fig. 32 to an operating position shown by double dot and dash line, the engaging pin 82c moves across the pin 81d from the position shown in Fig. 33. When the engaging pin 82c is moved to the position b, the inner cable 82b draws the engaging pin 82c toward the wheel and urges the lever body 81 b to be rotated clockwise, so that the lever body 81c is held in the operating position, with the parking brake in an operating state. When the lever body 81b is rotated anticlockwise against the bias force, the lever body 81b is released from the state of holding the operating position, and the parking brake is returned to the non-operating state. With rotation of the lever body 81b, the inner cable 82b moves while passing through the space between the pair of vertically divided pins 81d.

The rear end of the inner cable 82b of the parking brake cable 82 is connected to a cam lever 84 in the parking brake mechanism 83 provided in a hub 91a of a cast wheel 91 of the rear wheel 6. The hub 91a is supported by a rear wheel axle 93 journaled at the rear end of a transmission case 5c of the engine unit 5 for rotation with the rear wheel axle. The right end of the rear wheel axle 93 is journaled on a rear arm 92 through a bearing 94a. The forward end of the rear arm 92 is fixed to the engine unit 5, and the engine unit 5 is supported on the body frame 2 for vertical swinging movement about the pivot shaft 5d.

The parking brake mechanism 83 is configured such that at least a brake shoe section can be settled within the axially projected area of the inside diameter (insert hole) of an annular disc plate 90 constituting a disc brake mechanism 89. The parking brake mechanism 83 is inserted in a brake slide hole 91b from the disc plate 90 side and disposed with a brake panel section 85 positioning further outward in the axial direction than the disc plate 90. The disc brake mechanism 89 is used for a brake in normal running, and arranged such that the disc plate 90 is mounted on the outer end face of the hub section 91a and held by a caliper 95 supported on the rear arm 92.

The parking brake mechanism 83 is configured as follows. The disc-like brake panel 85 is inserted in the brake slide hole 91 b of the hub 91 a and supported by the rear wheel axle 93 for rotation relative thereto through a bearing 94b, and the rear arm 92 is adapted to stop rotation of the brake panel. A pair of semi-circular brake shoes 86 are disposed in the shape of a circle as a whole, axially inwardly of the brake panel 85. The support ends 86a of both brake shoes 86 are fitted on inwardly projecting pins 85a implanted in the brake panel 85 such that the diameter of the foregoing circle can be expanded and contracted. Both of the brake shoes 86 are biased by return springs 87 in the direction of contraction of the diameter, and an expanding end 86b is enabled to expand the diameter by means of a plate-like cam section 88a of a brake cam 88. To an outwardly projecting section 88b of the brake cam 88 is connected the cam lever 84 for transmission of rotational force.

In operating the parking brake device 80, the lever body 81b is rotated from the non-operating position shown by solid line in Fig. 32 to the operating position shown by double dotted and dash line. Then, the cam lever 84 of the parking brake mechanism 83 causes the brake cam 88 to move and the brake cam 88 causes the brake shoes to expand, thereby generating a braking force. At this time, the lever body 81 b is held in the operating position shown by double dot and dash line in Fig. 32 by means of the holding mechanism. With this holding position, the lever body 81 is located just under the left grip 76, and the lever body 81b will interfere with the driver's hand gripping the left grip 76.

In releasing the parking brake device 80, the lever body 81b is rotated to a releasing position. Then, the inner cable 82b of the brake cable 82 is loosened and the diameter of the brake shoes 86 of the parking brake mechanism 83 is contracted, which releases the braking force.

As described above, the parking brake mechanism 83 has a smaller diameter than the inside diameter of the disc plate 90, and the brake panel 85 is inserted in the disc plate 90 from the disc plate 90 side and disposed in aligning relation with the disc plate 90 when viewed in the direction perpendicular to the axis, so that size increase in the axial direction can be avoided in spite of installation of both the disc brake mechanism 89 and the parking brake mechanism 83.

During operation of the parking brake device 80, the lever body 81 b is located just under the left grip 76 and is adapted to interfere with the driver's hand gripping the left grip 76, thereby preventing reliably the driver from starting running without rotating the lever body 81b to the non-operating position.

In addition, the lever body 81b is provided on the left grip 76 side, so that the driver is able to operate a throttle grip by the right hand while releasing the lever body 81b by the left hand in starting running, providing a good operability.

Recapitulated, it is provided a parking brake device for a vehicle, adapted to prevent a wheel or wheels from rotating by the rotation of a parking lever at parking, wherein a left grip is disposed on the left end of a steering handle and the parking lever is disposed in the area inward from the grip and rotatable about an axis extending generally perpendicularly, and wherein, when the parking lever is rotated toward the position where the parking brake device is in operation, the parking lever interferes a hand which is holding the left grip, and the parking lever can be rotated to the non-operating position of the parking brake by the hand while the left grip is held by the hand.

## Claims

1. A parking brake device (80) for a vehicle, adapted to prevent a wheel or wheels (3,6) from rotating at parking and comprising:
a parking lever (81 b) connected to a parking brake mechanism (83) by a parking cable (82), wherein said parking lever (81b) is disposed inward from a grip (76) disposed on an end of a steering handle (16) in such a manner that said parking lever (81b) is arranged adjacent to a brake lever (78) disposed close-by said grip (76), and wherein said parking lever (81 b) is rotatable between an operating and a non-operating position and wherein, in the operating position, said parking lever, due to its position, interferes with a hand holding said grip (76).

2. A parking brake device according to claim 1, **characterized in that** said parking lever (81 b) is supported by a holder (81 a) for rotation about a pair of vertically divided pins (81d), wherein said holder (81 a) is fixed to a bottom of a switch case (77) fixed on said steering handle (16).

3. A parking brake device according to claim 2, **characterized in that** a forward end of an outer cable (82a) of said parking cable (82) is fitted in a cable engaging section (81 c) of said holder (81a), and an engaging pin (82c) fixed to a forward end of an inner cable (82b) is fitted in said parking lever (81 b) near a center of rotation thereof.

4. A parking brake device according to at least one of the preceding claims 1 to 3, **characterized in that** said parking lever (81 b) is provided on one side of said steering handle (16) opposite to the other side of said steering handle (16) with a throttle grip disposed on an end thereof.

## Patentansprüche

1. Parkbremsvorrichtung (80) für ein Fahrzeug, vorgesehen um ein Rad oder Räder (3, 6) am Drehen beim Parken zu hindern und die aufweist:
einen Parkhebel (81 b), verbunden mit einer Parkbremsvorrichtung (83) durch ein Parkkabel (82), wobei der Parkhebel (81 b) einwärts eines Griffes (76) angeordnet ist, vorgesehen an einem Ende eines Lenkhandgriffes (16) in solch einer Weise, dass der Parkhebel (81 b) benachbart zu einem Bremshebel (78), angeordnet nahe an dem Griff (76), angeordnet ist, und wobei der Parkhebel (81 b) zwischen einer Betriebs- und einer Nichtbetriebsposition drehbar ist und wobei in der Betriebsposition der Parkhebel infolge seiner Position einer Hand stört, die den Griff (76) hält.

2. Parkbremsvorrichtung nach Anspruch 1, **dadurch gekennzeichnet, dass** der Parkhebel (81 b) durch einen Halter (81 a) zur Drehung um ein Paar von vertikal geteilten Stiften (81 d) gelagert ist, wobei der Halter (81 a) an einem Boden eines Schaltgehäuses (77), befestigt an dem Lenkhandriffes (16), befestigt ist.

3. Parkbremsvorrichtung nach Anspruch 2, **dadurch gekennzeichnet, dass** ein vorderes Ende eines äußeren Kabels (82a) des Parkkabels (82) in einen Kabeleingriffabschnitt (81 c) des Halters (81 a) eingesetzt ist und ein Eingriffsstift (82c), befestigt an einem vorderen Ende eines inneren Kabels (82b), in den Parkhebel (81 b) nahe einer Drehmitte derselben eingesetzt ist.

4. Parkbremsvorrichtung nach zumindest einem der vorhergehenden Ansprüche 1 bis 3, **dadurch gekennzeichnet, dass** der Parkhebel (81 b) auf einer Seite des Lenkhandriffes (16), gegenüber zu der anderen Seite des Lenkhandriffes (16) mit einem Drosselgriff, angeordnet an einem Ende desselben, vorgesehen ist.

## Revendications

1. Dispositif de frein de stationnement (80) pour un véhicule, conçu pour empêcher une ou des roues (3, 6) de tourner lors du stationnement, et comprenant :
un levier de stationnement (81b) raccordé à un mécanisme de frein de stationnement (83) par un câble de stationnement (82), dans lequel ledit levier de stationnement (81b) est disposé vers l'intérieur d'une manette (76) disposée sur une extrémité d'une poignée de direction (16) de telle manière que ledit levier de stationnement (81b) est agencé en étant adjacent à un levier de frein (78) disposé tout près de ladite manette (76), et dans lequel ledit levier de stationnement (81b) peut être tourné entre une position opératoire et une position inopératoire et dans lequel, dans la position opératoire, ledit levier de stationnement, en raison de sa position, interfère avec une main tenant ladite manette (76).

2. Dispositif de frein de stationnement selon la revendication 1, **caractérisé en ce que** ledit levier de stationnement (81b) est supporté par un support (81a) pour tourner autour d'une paire de broches verticalement divisées (81d), dans lequel ledit support (81a) est fixé à la partie inférieure d'un boîtier de commutateurs (77) fixé sur ladite poignée de direction (16).

3. Dispositif de frein de stationnement selon la revendication 2, **caractérisé en ce qu'**une extrémité avant d'un câble externe (82a) dudit câble de stationnement (82) est montée dans une section d'engagement de câble (81c) dudit support (81a), et une broche d'engagement (82c) fixée à une extrémité avant d'un câble interne (82b) est montée dans ledit levier de stationnement (81b), à proximité de son centre de rotation.

4. Dispositif de frein de stationnement selon au moins l'une des revendication précédentes 1 à 3, **caractérisé en ce que** ledit levier de stationnement (81b) est disposé sur un côté de ladite poignée de direction (16) opposé à l'autre côté de ladite poignée de direction (16), une manette des gaz étant disposée sur son extrémité.
